# EUROPÄISCHE PATENTSCHRIFT

(11) **EP 2 205 439 B1**
(45) Veröffentlichungstag und Bekanntmachung des Hinweises auf die Patenterteilung: **12.08.2015**
(21) Anmeldenummer: 08838922.6
(22) Anmeldetag: 08.10.2008
(51) Int. Cl.: B32B 37/22

(54) **FOLIE MIT VERSTÄRKTEN RÄNDERN UND KANTEN**
FILM WITH REINFORCED BORDERS AND EDGES
FILM DOTE DE BORDS ET D'ARETES RENFORCES

(30) Priorität: 10.10.2007 EP 07019778
(43) Veröffentlichungstag der Anmeldung: 14.07.2010
(73) Patentinhaber: Duo-Plast AG, 36341 Lauterbach (DE)
(72) Erfinder: JÄGER, Norbert, 36341 Lauterbach (DE)
(74) Vertreter: f & e patent
(86) Internationale Anmeldenummer: PCT/EP2008/008476
(87) Internationale Veröffentlichungsnummer: WO 2009/049804

(56) Entgegenhaltungen:
- EP-A- 1 233 853
- EP-A- 1 331 071
- WO-A-02/096634
- WO-A-2006/016393
- CH-A5- 644 411
- US-A- 5 890 743
- US-A1- 2006 090 845

## Beschreibung

Die vorliegende Erfindung bezieht sich auf Folien mit verstärkten Rändern und Kanten, die beim Verarbeiten ein geringeres Risiko des Einreißens der Kanten aufweisen, auf ein Verfahren zum Herstellen solcher Folien, auf eine Vorrichtung zu Herstellung solcher Folien und auf die Verwendung solcher Folien.

Bei Stretchfolien, insbesondere bei vorgedehnten Stretchfolien sind die Kanten an der Seite einer Rolle jeweils der empfindlichste Bereich. Minimale Beschädigungen reichen häufig aus, um das Einreißen von Kanten und Rändern bis hin zum Abriss während der Verarbeitung zu verursachen. Außerdem bestehen Probleme, wenn die Folie umschlägt und somit haftende Seite auf haftende Seite gerät und/oder auch wenn beide Seiten der Folie haftend sind, da die Haftung das Abrollen der Folie erschwert und die Kanten und Ränder dabei möglicherweise ebenfalls beschädigt werden.

Um dem Entstehen von Fehlern an den Kanten vorzubeugen, wurde bisher im Stand der Technik in erster Linie der Ansatz gewählt die Folie an den Rändern umzuschlagen. Dies hat zur Folge, dass die empfindlichen Kanten der Folie nicht die äußere Begrenzung der Folie bei der Verarbeitung darstellen, sondern durch die darauf aufliegende restliche Folie geschützt sind. Ein solcher Ansatz wird insbesondere in US 5,531,393, EP-A 638 505 und JP-A 50053464 beschrieben. In allen diesen Schriften wird gelehrt die fertiggestellte kalte Folie an den Rändern umzuschlagen und in diesem Zustand aufzurollen.

Die EP-A 1 095 759 beschreibt ebenfalls die Herstellung einer Folie, bei der die Ränder umgeschlagen werden, jedoch werden die umgeschlagenen Ränder hier zusätzlich durch Heißsiegeln in diesem Zustand fixiert, um ein Rückschlagen der umgeschlagenen Kanten während der späteren Verarbeitung der Folie zu verhindern.

Das US-Patent 4,905,451 beschreibt das Falten einer streckbaren Folie in der Mitte der Folie, so dass die Folie in mehreren Lagen aufeinander liegt, um die Folie zu verstärken und dadurch zu stabilisieren.

Die Patentanmeldungen WO01/60709, WO03/059750 und WO2006/018028 beschreiben einen anderen Ansatz zur Stabilisierung von Folien, insbesondere von Folien, die auf ihrer Fläche vielfach perforiert sind. Um Folien verarbeiten zu können, die auf ihrer Fläche vielfache Perforationen aufweisen (z.B. Folien für luftdurchlässige Verpackungen), wird vorgeschlagen zwischen den Perforationen Verstärkungsstreifen aufzubringen, die der perforierten Folie eine solche Stabilität verleihen, dass diese weiterhin mechanisch, bevorzugt automatisch verarbeitbar ist.

Die WO2006/016393offenbart das Aufbringen zweier breiter Folienstreifen auf die Seitenränder einer weiteren Folie, wobei die beiden aufgebrachten Folienstreifen dazu dienen die weitere Folie zu verbreitern. An den Kanten bzw Rändern der so hergestellten verbreiterten Folie liegt diese nicht doppellagig vor.

Aufgabe der vorliegenden Erfindung war es eine Folie bereitzustellen, deren Kanten auf einfache und effektive Weise während der Herstellungsverfahren der Folie vor mechanischer Beeinflussung geschützt werden. Die Herstellungsverfahren können insbesondere die Folien Extrusion bzw. das Gießen der Folie und einer Weiterverarbeitung in einer Konfektion oder einer weiteren Bearbeitung umfassen.

Diese Aufgabe wird gelöst durch ein Verfahren zur Herstellung einer Folie mit verstärkten Rändern und Kanten gemäß Anspruch 1, bei dem während deren Herstellungsverfahrens vor deren erstem Aufrollen jeweils an den Rändern der Folie ein Streifen einer weiteren Folie so aufgebracht wird, dass die Folie wenigstens im Bereich der Kanten wenigstens doppellagig ist, wobei die Streifen (B') so aufgebracht werden, dass die Streifen (B') mit den Kanten der Folie (A) nahezu bündig abschließen, und eine Folie, die jeweils an den Rändern einen Streifen einer weiteren Folie aufweist, welcher die Kanten der Folie verstärkt.

Im Zusammenhang mit der vorliegenden Erfindung bedeuten "Kanten" der Folie die äußere Begrenzung der Folie an jeder Seite (Seite im Sinne von rechts und links), insbesondere die äußerste Begrenzung der Folie (in zur Folienebene senkrechter Richtung), während "Ränder" die Bereiche der Folie beschreiben, die sich im äußeren Bereich der Folie von den (zur Folienebene senkrechten) Kanten hin zur Folienmitte befindet. Unter "Rändern" sind somit die jeweils äußeren Zentimeter der Folie auf ihrer Fläche zu verstehen, beispielsweise die jeweils äußeren 10 cm, bevorzugt die äußeren 8 cm, weiter bevorzugt die äußeren 5 cm, noch weiter bevorzugt die äußeren 3 cm. Besonders bevorzugt fallen unter den Begriff "Ränder" jeweils wenigstens die äußersten 2 Millimeter bis 1 Zentimeter der Folie. Hierbei sollte es so verstanden werden, dass in begrifflicher Hinsicht eine "Kante" unmittelbar in einen "Rand" übergeht, sobald auch der äußerste Bereich der Folienebene betroffen ist.

Die vorliegende Erfindung ist nicht auf eine bestimmte Folienart beschränkt, jedoch ist es bevorzugt, dass die Verstärkung der Ränder und/oder der Kanten bei solchen Folien eingesetzt wird, die an den Kanten besonders empfindlich sind, beispielsweise bei sehr dünnen Folien mit einer Folienstärke im Bereich von 5 bis 100µm. Die Verstärkung der Kanten dient in erster Linie dazu die Einreiß- und Verletzungsgefahr zu verringern. Durch das Aufbringen des Streifens an den Rändern der Folie wird die jeweilige Kante der Folie "verstärkt", so dass die Verletzungsgefahr bei mechanischer Belastung der Kanten verringert wird. Die "Verstärkung" der Kanten wird dadurch erzielt, dass die Folie an den Rändern mehrlagig vorliegt. Bei Aufbringen eines Streifens wird die Folie in diesem Bereich zweilagig, bei Aufbringen zweier Streifen übereinander dreilagig usw.

In der vorliegenden Erfindung ist zwischen "mehrlagigen" und "mehrschichtigen" Folien zu unterscheiden. Eine "mehrlagige" Folie umfasst mehrere Lagen einer oder verschiedener Folien eines bestimmten Aufbaus. Hierbei werden wenigstens zwei vorher getrennte Lagen einer oder verschiedener fertiger Folien miteinander in Kontakt gebracht, die dadurch einen "Stapel" von Folien bilden. Hierbei können die chemischen und/oder physikalischen Eigenschaften der einzelnen Folien(lagen) übereinstimmen, oder sie können sich voneinander unterscheiden. Bei einer "mehrschichtigen" Folie besteht eine Folienbahn aus unterschiedlichen Schichten, die zusammen die Folie ergeben. Solche mehrschichtigen Folien sind im Stand der Technik umfangreich bekannt und beschrieben, sehr häufig sind beispielsweise Streckfolien solche mehrschichtigen Folien. Hierbei ist gemäß der Definition der vorliegenden Anmeldung eine mehrschichtige Folie jede Folie, die aus mehr als einer Schicht eines chemischen Materials besteht. Im Stand der Technik werden Folien, die gemäß der hiesigen Definition als "mehrschichtig" bezeichnet werden, häufig auch als "mehrlagig" beschrieben, jedoch sollen solche Folien, die unter die hiesige Definition fallen unabhängig von der Definition des Standes der Technik als "mehrschichtig" angesehen werden. Beispiele für "mehrschichtige" Folien aus dem Stand der Technik sind beispielsweise die Folien, die in EP-A 1 201 406, EP-A 1 022 131, WO 95/15851, WO 96/29203 und vielen weiteren Anmeldungen beschrieben sind, ohne auf diese beschränkt zu sein. Aus diesen Ausführungen sollte verständlich werden, dass eine mehrschichtige Folie eine untrennbare Einheit darstellt, die mehrere Schichten, beispielsweise zwei, drei, vier, fünf oder mehr Schichten umfasst. Selbstverständlich können mehrere mehrschichtige Folien in mehreren Lagen, beispielsweise zwei, drei, vier usw. Lagen miteinander in Kontakt gebracht werden, um eine mehrlagige Folie zu bilden.

In einer bevorzugten Ausführungsform ist die zu schützende Folie (im weiteren "zu schützende Folie" oder einfach nur "Folie") eine Streckfolie, bevorzugt eine thermoplastische streckbare Verpackungsfolie, insbesondere eine streckbare Verpackungsfolie mit wenigstens einer haftenden Seite, also beispielsweise eine Folie mit einer haftenden und einer nicht-haftenden Seite, oder auch eine Folie mit zwei haftenden Seite. Solche Folien werden allgemein auch als Stretch-, Dehn- oder Wickelfolien bezeichnet. Solche Folien können durch Gießen ("gegossene Folien") oder durch Aufblasen ("geblasene Folien" oder "Blasfolien") der Ausgangsmaterialien hergestellt werden. Für das Ziel der vorliegenden Erfindung spielt die Herstellungsart der Folien keine Rolle, vielmehr sind alle Folien, die das Problem des Ein- oder Abreißens der Kanten beim Abwickeln von der Rolle während des Verarbeitens haben für die vorliegende Erfindung geeignet.

Streckbare Folien, die sich selbst versiegeln, wenn Teile davon überlappen, sind als Klebefolien bekannt. Diese Folien sind in der Regel mehrschichtige Folien und werden beispielsweise verwendet, wenn es erwünscht ist Gegenstände zu verpacken (z.B. durch Folien auf Handrollen) oder eine Gruppe von Gegenständen fest zusammenzuhalten und/oder zu verpacken, wie z.B. bei der Palettierung von Ladungen. Für die Palettierung von Ladungen wird die Folie eng um die Ware oder die Vielzahl von Waren, die sich auf der Palette befinden, gehüllt und mit sich selbst versiegelt, solange die Folie sich im gestreckten Zustand befindet, um eine sichere Verpackung in Einheiten zu schaffen. Die eingesetzten Folien können vor dem Einsetzen als Verpackungsmaterial in nicht gestrecktem wie auch in vorgestrecktem (vorgedehntem) Zustand gelagert werden und werden bei ungestreckten Folien während des Verpackungsvorgangs gestreckt. Bei diesem Abroll- und Streckvorgang während des Verarbeitens der Folie wirken auf die Folienkanten starke Kräfte, nämlich beispielsweise Adhäsionskräfte der Folie an die Folienrolle und Dehnungskräfte durch das Strecken der Folie, die eine Verletzungsgefahr für die Kanten, insbesondere eine Einreißgefahr oder Abreißgefahr in sich bergen.

Gemäß der vorliegenden Erfindung wird dieser Gefahr begegnet, indem wenigstens ein separater Streifen einer weiteren Folie (im Folgenden "Streifen") auf die Ränder der Folie aufgebracht wird, wobei der/die Streifen die Kanten der Folie verstärkt. Der/die Streifen wird/werden so aufgebracht, dass er/sie mit den Kanten der Folie möglichst nahezu bündig abschließen. Dies wird erreicht, indem der/die Streifen an den Rändern der Folie so aufgetragen wird/werden, dass er/sie die Kanten der Folie verstärkt, indem er/sie entweder mit den Kanten nahezu bündig, bevorzugt bündig abschließt/abschließen, oder der/die Streifen wird/werden so auf die Folie aufgebracht, dass er/sie diese Kanten zunächst überragt/überragen und anschließend kann der überstehende Teil noch vor dem Aufrollen der Folie gegebenenfalls abgeschnitten werden.

Die für die Streifen verwendbare Folie kann jede Folie sein, die auch für die zu schützende Folie verwendet werden kann. Dies bedeutet, dass für die Streifen derselbe Folientyp verwendet werden kann, oder auch ein anderer Folientyp, der für die Verarbeitung gemäß der vorliegenden Erfindung geeignete Eigenschaften hat. Bevorzugt ist die für die Streifen verwendete Folie eine streckbare Folie mit einer haftenden und einer nicht-haftenden Seite. In diesem Fall ist es bevorzugt, dass die Streifen so mit der Folie in Kontakt gebracht werden, dass die haftende Seite der Folie zugewandt ist. Im Falle, dass die Folie selbst eine haftende und eine nicht-haftende Seite aufweist, ist es bevorzugt, dass die Streifen auf der haftenden Seite der Folie aufgetragen werden. Im Falle, dass die Folie zwei haftende Seiten aufweist, können auch auf beiden Seiten der Folie, also auf Ober- und Unterseite Streifen and den Rändern aufgebracht werden. Das Aufbringen der Streifen hat neben dem Effekt der "Verdickung" der Kanten den zusätzlichen Effekt, dass die Folie, die sich auf der Rolle befindet, an den Rändern und Kanten nicht so stark an der noch auf der Rolle befindlichen Folie klebt. In dem Bereich der Ränder und Kanten wird durch das Aufbringen der Streifen die haftende Seite "überklebt", so dass dort die Haftung stark verringert wird. Somit wird dieser empfindliche Bereich aufgrund der geringeren Haftung beim Abrollen der Folie weniger stark beansprucht. Die Streifen können auch auf beiden Seiten der Folie (im Sinne der Oberseite und der Unterseite) aufgebracht werden, jedoch ist dies gemäß der Erfindung nicht bevorzugt, da eine solche Ausführungsform mit übermäßigem Materialaufwand verbunden wäre.

In einer bevorzugten Ausführungsform sind die aufgebrachten Streifen aus einem Folienmaterial, das einen sehr ähnlichen, bevorzugt denselben Dehnungskoeffizienten in Längsrichtung hat, wie die Folie selbst. Hierbei ist anzumerken, dass Streifen, die stärker dehnbar als die Folie sind, ohne weiteres für die Erfindung verwendbar sind, während die Verwendung von Streifen, die weniger dehnbar sind als die Folie bei der späteren Verarbeitung nicht bevorzugt sind. In einer besonders bevorzugten Ausführungsform bestehen die aufgebrachten Streifen aus demselben Folienmaterial wie die Folie selbst.

Grundsätzlich können solcheStreifen zu jedem Zeitpunkt der Bearbeitung der Folie auf diese aufgebracht werden. Beispielsweise können Streifen auf die Folie aufgebracht werden, indem eine fertig hergestellte Folienbahn, die bereits auf einer Rolle aufgerollt ist, nochmals abgerollt wird und die Streifen auf die abgewickelte Folie aufgebracht werden, bevor diese ohne weitere Bearbeitung wieder aufgewickelt wird, oder die Streifen werden auf die Folie aufgebracht bevor oder nachdem die Folie zusätzlich gereckt wird, und die Folie anschließend wieder aufgerollt wird, um sie in dieser Form zur weiteren Verarbeitung zur Verfügung zu stellen, z.B. zur Nutzung als Verpackungsmaterial.

Gemäß der vorliegenden Erfindung werden die Streifen jedoch während der Herstellungsverfahren unmittelbar nach dem Erzeugen (beispielsweise durch Extrudieren oder Gießen) der Folie und vor deren erstem Aufwickeln auf eine Rolle auf die Folie aufgebracht.

Für das Aufbringen können die Streifen beispielsweise mithilfe einer Zuführvorrichtung in zuvor definierter Position in die unmittelbare Nähe der Folie gebracht und dann mit dieser gemeinsam einer Umlenkwalze zugeführt werden, so dass die Folie und die Streifen (spätestens) auf der Walze in Kontakt kommen, oder die Streifen können mithilfe einer Zuführvorrichtung, welche gegebenenfalls ein Andruckelement umfasst, unmittelbar mit der Folie in Kontakt gebracht werden. Das Andruckelement kann beispielsweise eine kleine Rolle oder ein in Richtung der Folie hervortretendes elastisches Material sein, der in der Vorrichtung so angeordnet ist, dass er den jeweiligen Streifen mit der Folie in Kontakt bringt. Bevorzugt werden die Streifen vor dem Kontakt mit der Folie ebenso wie die Folie selbst unter einer gewissen Spannung gehalten, um die Führung der Streifen bis hin zum Kontakt mit der Folie zu erleichtern.

In der erfindungsgemäßen Ausführungsform, in der die Streifen während der Folienherstellung aufgebracht werden, ist die Zuführvorrichtung bevorzugt Teil der gesamten Anlage zu Herstellung der Folie und wird bevorzugt an geeigneter Stelle vor dem Aufwickeln der hergestellten Folie in die Gesamtanlage eingefügt.

In einer weiteren Ausführungsform der Erfindung umfasst die Anlage jeweils nach der Zuführvorrichtung und vor dem Aufwickeln der Folie eine Schneidevorrichtung, die geeignet ist gegebenenfalls überstehende Ränder der Streifen abzuschneiden, so dass die Kanten der Streifen mit den Kanten der Folie bündig abschließen.

Der Vorteil der vorliegenden Erfindung gegenüber dem aus dem Stand der Technik verwendeten Verfahren, bei dem sie Seitenränder der Folie umgeschlagen werden ist es, dass einerseits die Folie mechanisch wesentlich weniger belastet wird, da die Folie nicht mit einem Umschlagmechanismus in Berührung kommt, der unmittelbar an die Folie angreifen muss, andererseits können die Streifen an die Kanten der Folie angebracht werden, bevorzugt möglichst nahezu bündig, so dass Unregelmäßigkeiten im Kantenbereich, die durch nicht perfektes Umlegen der Folienränder entstehen können, vermieden werden. Beim Umlegen der Ränder können beispielsweise Lufteinschlüsse erfolgen, oder die Folie berührt sich selbst zu früh, was zu einem ungenauen Aufeinanderliegen der eigenen Ränder auf die Folie führt. Bei der erfindungsgemäßen Ausführungsform können solche Fehler vermieden werden. Ein weiterer Vorteil ist, dass durch das erfindungsgemäße Verfahren durch eine Mehrfachlage im Bereich der Ränder an der Folie jeweils eine Mehrfachkante, z.B. eine Doppelkante entsteht, die im Vergleich zu einer einfachen Kante höhere Festigkeitswerte aufweisen, so dass ein Verletzen oder Einreißen der Folie reduziert werden kann. Dieser Vorteil wird auch bei geringfügig zur Kante versetzt aufgebrachten Streifen erzielt, so dass ein vollständig passgenaues Aufbringen der Streifen zu der Kante nicht zwingend notwendig ist, wenn auch ein (zumindest nahezu) bündiges Abschließen der Streifen mit der Folie bevorzugt ist.

Während des Herstellungsverfahrens von Folien wird üblicherweise nach dem Extrudieren oder Gießen an den Rändern der Folie jeweils ein Streifen abgeschnitten, um eine saubere Kantenbildung zu gewährleisten. Aus breiten Folien ist auch ein sogenannter "Mittelschnitt" üblich, d.h. aus breiten Folien wird aus der Folienbahn in der Mitte ein Streifen herausgeschnitten. Die so erhaltenen abgeschnittenen Streifen sind üblicherweise bisher als Zwangsausschuss verworfen worden.

Die von der Folie abgeschnittenen Streifen können zur späteren Verwendung gemäß der vorliegenden Erfindung auf Rollen aufgewickelt werden. Selbstverständlich können auch andere Streifen, außer denen aus der Folienherstellung derselben Folie für das erfindungsgemäße Verfahren verwendet werden. Somit befinden sich die Streifen in einer Ausführungsform der Erfindung vor dem Zuführen zu der Folie selbst auf Rollen und können ebenfalls in ungestrecktem oder vorgestrecktem (vorgedehnten) Zustand als solche gelagert werden. Um den Kontakt der Streifen mit der Folie zu bewirken, wird der Anfang eines auf der Rolle befindlichen Streifens abgelöst und über die Zuführvorrichtung mit der Folie in Kontakt gebracht.

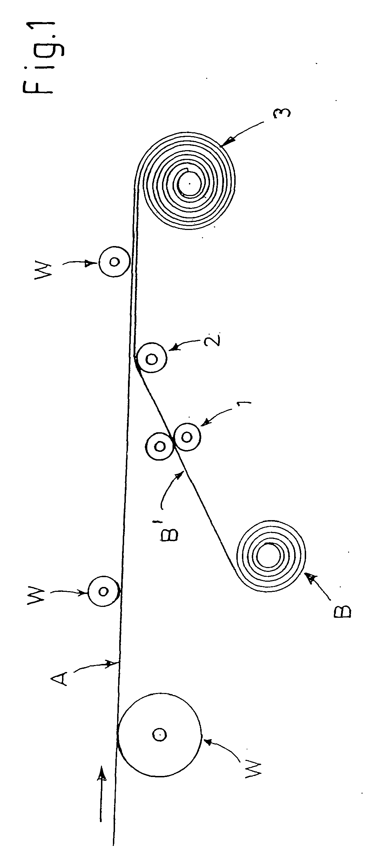

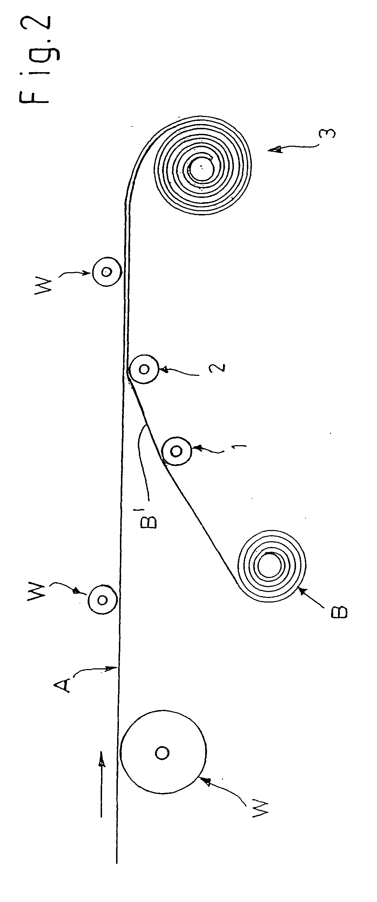

Die Zuführvorrichtung (1) kann in einer Ausführungsform (dargestellt in Abb. 1) beispielsweise zwei zueinander in Kontakt stehende Walzen umfassen, die so angetrieben werden, das sie den Streifen (B') von der Vorratsrolle (B) abziehen und den Streifen (B') in Richtung auf die Folienbahn (A) weiterführen. Alternativ kann die Zuführvorrichtung (1) auch aus nur einer einzelnen Rolle oder Walze bestehen, über die der Streifen (B') in Richtung auf die Folienbahn (A) geführt wird, welche so positioniert wird, dass der Streifen (B') nach Kontakt mit der Folie durch den Bewegungslauf der Folienbahn (A) von selbst von der Vorratsrolle abgewickelt wird, also beispielsweise unmittelbar oberhalb oder unterhalb der Folienbahn (A) jeweils am Rand der darunter bzw. darüber laufenden Folie (dargestellt in Abb.2). In dieser Ausführungsform ist es bevorzugt nicht aber notwendig, dass die Walze oder Rolle so ausgestaltest ist, dass der Streifen (B') darauf mit hoher Genauigkeit positioniert werden kann, z.B. indem an den Rändern der Rolle/Walze bei Bedarf wenigstens ein Anschlag vorliegt oder Formen von Seitenkantensteuerungen oder Regelungen vorliegen, der/die ein "Verrutschen" des Streifens (B') auf der Rolle/Walze verhindert/verhindern.

Bevorzugt umfasst die Anordnung außerdem ein Andruckelement (2), das den Streifen mit der Folie in Kontakt bringt. Dieses Andruckelement (2) kann ebenfalls eine Rolle oder Walze sein, die so positioniert ist, dass sie den Streifen (B') an gewünschter Position gegen die Folie drückt. In einer möglichen Ausführungsform kann die Rolle oder Walze an der Außenseite, also an der Seite, die an der Kante der Folienbahn entlangläuft, einen Anschlag oder Kragen haben, an dem sowohl die Folienbahn (A), als auch der aufgebrachte Streifen (B') angrenzen. Beispielsweise auf diese Weise kann der Streifen (B') zu der Folienbahn (A) so positioniert werden, dass er mit der Kante der Folie bündig abschließt. Alternativ können beispielsweise auch Formen von Seitenkantensteuerungen oder Regelungen vorliegen, die ein Aufeinanderliegen der Folie und der Streifen gewährleisten. Ein solcher Anschlag oder Kragen oder solche Steuerungen oder Regelungen sind jedoch kein notwendiges Merkmal für eine Vorrichtung gemäß der Erfindung. Eine weitere Ausführungsform des Andruckelements (2) kann ein elastisches Material sein, das jedoch eine solche Eigenspannung hat, dass es in der Lage ist den Streifen (B') mit einer solchen Kraft gegen die Folienbahn (A) zu drücken, dass der Streifen mit der Folie in Kontakt kommt. In dieser Ausführungsform kann das Andruckelement (2) beispielsweise ein gefedertes Führungsröllchen oder ein biegsames Plättchen sein, dessen eines Ende in einer Position eingespannt ist, welche die gewünschte Positionierung des Streifens (B') an der Folienbahn (A) zulässt und dessen anderes Ende den Streifen (B') gegen die Folienbahn (A) drückt. Bevorzugt ist die Oberseite eines solchen Plättchens mit einem Material überzogen, das eine möglichst geringe mechanische Einwirkung auf den Streifen bewirkt, beispielsweise mit einem Fließ, Filz, einem weichen Kunststoff oder ähnlichem. Auch in dieser Ausführungsform ist es bevorzugt, dass auf dem Andruckelement (2) ein Kragen oder ein Anschlag auf der Seite vorliegt, die an der Kante der Folienbahn (A) anliegt, um eine genaue Positionierung des Streifens (B') an die Folienbahn zu gestatten. Auch hier ist die oben genannte Möglichkeit der Steuerung oder Regelung zur Positionierung der Streifen gegeben, ohne dass eine dieser Maßnahmen für die Erfindung zwingend notwendig wäre.

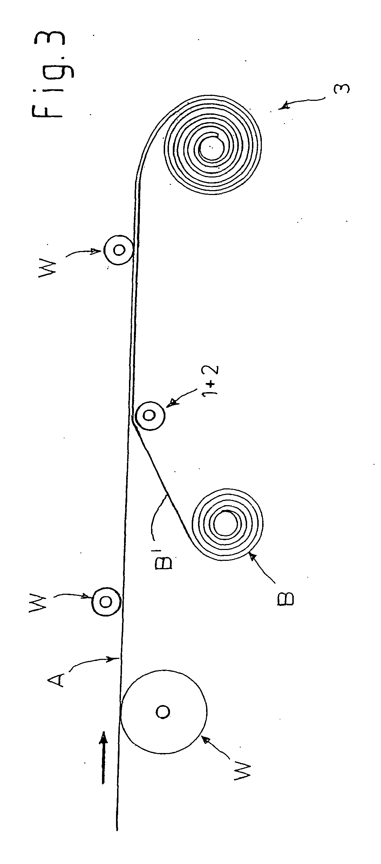

In einer Ausführungsform (dargestellt in Abb.3) kann die Zuführvorrichtung (1) und das Andruckelement (2) auch funktionell zusammenfallen, d.h. beide Funktionen können in einem Bauteil verwirklicht sein, beispielsweise in Form einer einzelnen Rolle oder Walze, die so positioniert ist, dass sie den Streifen (B'), der von der Vorratsrolle (B) zugeführt wird, unmittelbar mit der Folienbahn (A) in Kontakt bringt. In dieser Ausführungsform wird beispielsweise die Vorratsrolle (B) des Streifens unmittelbar unterhalb oder oberhalb der laufenden Folienbahn positioniert und der abgewickelte Streifen (B') über eine einzelne Rolle oder Walze direkt mit der Folienbahn (A) in Kontakt gebracht.

Die obigen Ausführungen sind so zu verstehen, dass für das Anbringen eines Streifens an jedem Rand der Folie jeweils eine der beschriebenen Vorrichtungen an jeder Randseite der Folienbahn positioniert wird.

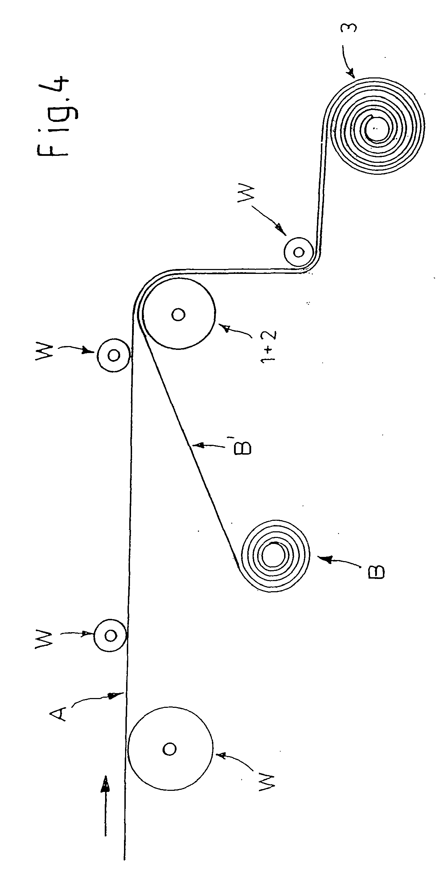

In einer weiteren Ausführungsform (dargestellt in Abb.4) kann die Zuführvorrichtung (1) (= Andruckelement) auch eine Umlenkwalze sein, die vollständig unter der gesamten Breite der Folienbahn liegt, worüber die Folienbahn (A) und die Streifen (B') gemeinsam geführt werden. In diesem Fall kommen die Streifen (B') mit der Folienbahn (A) in Kontakt, wenn diese gemeinsam die Umlenkrolle passieren. Bei dieser Ausführungsform kann ebenfalls eine seitliche Begrenzung auf der Umlenkrolle dafür sorgen, das die Streifen (B') mit der Folienkante bündig abschließen. Auch die oben genannten Alternativen der Steuerung oder Regelung zur Positionierung der Streifen an der Folie sind hier möglich, aber nicht notwendig.

In jeder der beschriebenen Ausführungsformen kann auf eine seitliche Kragung bzw. einen seitlichen Anschlag auf der Zuführvorrichtung bzw. dem Andruckelement verzichtet werden. In diesem Fall kann es eintreten, dass die Streifen auch nicht-bündig mit der Folienkante aufgebracht werden. In einem solchen Fall ist es möglich und bevorzugt, nicht aber notwendig, dass die Anlage vor der Aufwickelvorrichtung der Folienbahn auf eine Rolle eine Schneidevorrichtung umfasst, die überstehende Bereiche der Streifen über die Folienkante hinaus abschneidet.

Das Abwickeln des Streifens (B') von der Vorratsrolle (B) erfolgt in den Ausführungsformen, die keine gesondert angetriebene Zuführvorrichtung haben, durch das Fortlaufen der Folienbahn (A) in dem Herstellungsprozess. In dem Verfahren und de Anordnung gemäß der Erfindung ist es bevorzugt, dass die Zuführvorrichtung nicht gesondert angetrieben ist.

Es wird ausdrücklich darauf hingewiesen, dass in den gezeigten Abbildungen das Zuführen des/der Streifen(s) zwar jeweils von unten gezeigt ist, dass jedoch ein Zuführen von der Oberseite der Folie ebenfalls möglich und erfindungsgemäß ist. Im Falle, dass auf Ober- und Unterseite der Folie Streifen aufgebracht werden, kann ein Zuführen der Streifen auch von Ober- und Unterseite der Folie erfolgen.

Das Aufbringen der Streifen auf die Folie erfolgt im Herstellungsverfahren der Folie vor deren erstem Aufwickeln in Form einer Rolle. Während dieses Bearbeitens können weitere Bearbeitungsschritte durchgeführt werden, wie z.B. das Recken (Strecken, Dehnen) der Folie.

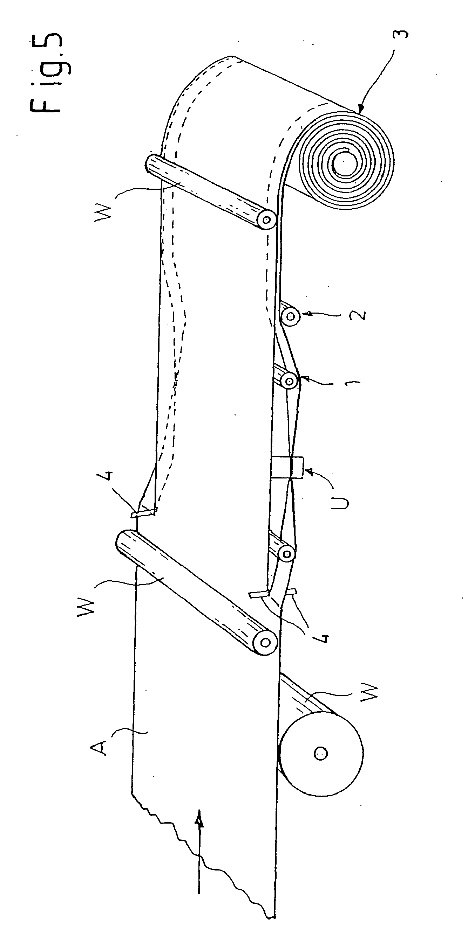

In einer nicht erfindungsgemäßen Ausführungsform des Verfahrens (eine Anordnung ist beispielhaft in Abb. 5 gezeigt) werden die nach der Extrusion / dem Gießen der Folie abgeschnittenen Streifen (B') ohne vorheriges Aufwickeln auf eine Rolle unmittelbar verwendet, um sie gemäß der erfindungsgemäßen Verfahren an den Rändern der Folie während der Herstellungsverfahren aufzubringen. Hierfür können, beispielsweise mithilfe einer Schneidevorrichtung (4), Streifen an den Rändern der Folie abgeschnitten werden und die Streifen mit Hilfe einer Umlenkvorrichtung (U) so der Folienbahn (A) zugeführt werden, dass sie in gewünschter Orientierung und Positionierung an der Folie anliegen können. Hierfür können - müssen aber nicht - wiederum eine Zuführvorrichtung (1) und/oder ein Andruckelement (2) in der Anordnung enthalten sein. Wird beispielsweise von einer Folie mit einer haftenden und einer nicht-haftenden Seite ein Streifen abgeschnitten, wird dieser bevorzugt einmal umgedreht, beispielsweise mit Hilfe einer geeigneten Umlenkvorrichtung (U), die eine Seitenumkehr des Streifens bewirkt, und noch vor dem Aufwickeln der Folie auf die Rolle an der Folie wieder angebracht, indem die haftende Seite des Streifens mit der haftenden Seite der Folie in Kontakt gebracht wird. Bei dieser Ausführungsform bestehen die Streifen aus demselben Material wie die Folie. Dadurch ist gewährleistet, dass die Folie und die Streifen denselben Dehnungskoeffizienten in Längsrichtung aufweisen, so dass es bei einer späteren Verarbeitung oder Verwendung zu keinerlei Spannungsunterschieden zwischen Folie und Streifen kommt.

Bei dieser Ausführungsform umfasst eine Anordnung zur Herstellung der Folie wenigstens eine Vorrichtung zum Abschneiden von Streifen (4) von den Rändern einer extrudierten oder gegossenen Folie, bevorzugt, aber nicht zwingend, eine Umkehrvorrichtung (U), die dazu geeignet ist den/die abgeschnittenen Streifen so umzudrehen, das die vorherige Oberseite des Streifens (entsprechend der Oberseite der Folie) zur Unterseite wird, gegebenenfalls eine Zuführvorrichtung (1), wobei diese funktionell mit der Umkehrvorrichtung (U) zusammenfallen kann, und bevorzugt ein Andruckelement (2), das so aufgebaut sein kann, wie oben für die Abbildungen 1 bis 4 beschrieben.

Eine nach einer der beanspruchten Ausführungsformen hergestellte Folie liegt in Form einer nicht gestreckten oder vorgestreckten Folie vor, die an ihren beiden Rändern jeweils einen Streifen einer weiteren Folie aufweist, die entweder vom selben Folientyp oder von unterschiedlichem Folientyp ist, wobei die Steifen bevorzugt dauerhaft an der Folie haften und die Kanten der Folie verstärken.

Die aufgebrachten Streifen können dieselbe Foliendicke aufweisen wie die Folie selbst, oder sie können dicker oder dünner sein, beispielsweise um ein gewünschtes Eigenschaftsprofil durch systematische Beeinflussung zu erreichen. Bevorzugt sind die aufgebrachten Folienstreifen maximal gleich dick wie die Folie, weiter bevorzugt sind die aufgebrachten Streifen dünner als die Folie. Die Breite der Streifen ist bevorzugt so, wie es oben für die "Ränder" der Folie definiert ist.

Die Folie als solche ist bevorzugt eine vollständig geschlossene Folienbahn, die keine Perforierungen oder Fehlstellen aufweist und - nach Aufbringen der Streifen - bevorzugt in Form von Folienrollen bereitgestellt wird. Selbstverständlich schließt eine weitere Verarbeitung der Folie das Perforieren der Folie nicht aus, jedoch ist dies nicht gemäß der Erfindung bevorzugt.

Ein bevorzugter Folientyp ist eine mehrschichtige Streckfolie, die eine haftende und eine nicht-haftende Seite aufweist, wie sie bevorzugt für das Verpacken von Gegenständen verwendet wird. Solche Folientypen sind beispielsweise in EP-A 1 201 406, EP-A 1 022 131, WO 95/15851, WO 96/29203 beschrieben. Jeder der dort beschriebenen Folientypen kann bevorzugt gemäß der vorliegenden Erfindung mit Streifen an den Rändern versehen werden, um Schäden an den Kanten der Folien beim Abwickeln zu vermeiden, jedoch ist die Erfindung ausdrücklich nicht auf die dort beschriebenen Folientypen beschränkt. Vielmehr kann jede Folienbahn, die beim Abwickeln und Verarbeiten das Problem des Einreißens der Kanten aufweist gemäß der vorliegenden Erfindung bearbeitet werden.

### Abbildungen

Die Abbildungen zeigen verschiedene Ausführungsformen der Anordnungen zu Herstellung einer Folie mit verstärkten Rändern und Kanten. In den Abbildungen ist jeweils eine Anordnung von Rollen oder Walzen (W) zur Führung der Folienbahn (A) gezeigt, eine Vorratsrolle (B) der Streifen (B'), die auf die Folie aufgetragen werden, eine Zuführvorrichtung (1) für das Zuführen der Streifen, ein Andruckelement (2) und eine Rolle der fertiggestellten Produktes (3), nämlich der Folie mit den aufgebrachten Streifen. In Abbildung 4 ist außerdem eine Schneidevorrichtung (4) gezeigt, die an den Rändern der Folie Streifen abschneidet,

In Abbildung 1 ist eine Ausführungsform gezeigt, bei der die Zuführvorrichtung (1) zwei angetriebene Rollen oder Walzen umfasst, außerdem ein Andruckelement (2).

Abbildung 2 zeigt eine Ausführungsform, bei der die Zuführvorrichtung (1) aus einer einzelnen, nicht angetriebenen Rolle oder Walze besteht, außerdem ist ein Andruckelement (2) gezeigt.

Abbildung 3 zeigt eine Ausführungsform, bei der die Zuführvorrichtung (1) und das Andruckelement (2) funktional in einer Rolle oder Walze zusammenfallen.

In Abbildung 4 ist eine Ausführungsform dargestellt, in der der Kontakt der Streifen (B') mit der Folienbahn auf einer Umlenkwalze (1)+(2) stattfindet, in der die Funktionen der Zuführvorrichtung und des Andruckelements zusammenfallen.

In Abbildung 5 ist eine Ausführungsform gezeigt, bei der während des Herstellungsverfahrens der Folie unmittelbar nach der Extrusion / dem Gießen der Folie mithilfe einer Schneidevorrichtung (4) Streifen an den Rändern der Folie abgeschnitten werden und die abgeschnittenen Streifen ohne vorheriges Aufwickeln auf eine Rolle unmittelbar wieder mit der Folie in Kontakt gebracht werden. Hierfür können die Streifen mit Hilfe einer Umlenkvorrichtung (U) so der Folienbahn (A) zugeführt werden, dass sie in gewünschter Orientierung und Positionierung an der Folie anliegen können.

### Beispiele

### Beispiel 1: Zugfestigkeit

Jeweils 500 mm breite Proben von 20 µm dicken dreischichtigen Polyethylen-Folien (Haftschicht-Kernschicht-Antihaftschicht) werden jeweils einmal mit Streifen (jeweils 15 mm Breite, 20 µm Dicke; Proben Nr. 1 bis 4) und einmal ohne Streifen an den Rändern (Proben Nr. 5 bis 8) einer Zugfestigkeitsprüfung gemäß DIN EN ISO 527-3 unterworfen. Der Versuch wird mit jeweils n=4 Proben durchgeführt. Einspannlänge der Folie 100 mm, Kraftaufnehmer Fmax 200N, Vorkraft 0,1 N, Prüfgeschwindigkeit 500 mm/min.

Tabelle 1 zeigt die erhaltenen Werte für die Reißdehnung der Folie und die aufgewendete Kraft bis zum Reißen der Folie.

**Tabelle 1**

| Probe Nr | Dehnkraft bis zum Reißen [N/mm^{2]} | Reißdehnung [%] |
|---|---|---|
| 1 | 58,29 | 627,83 |
| 2 | 59,87 | 634,58 |
| 3 | 52,00 | 562,83 |
| 4 | 62,75 | 631,83 |
| 5 | 41,36 | 489,91 |
| 6 | 33,63 | 387,33 |
| 7 | 34,50 | 425,75 |
| 8 | 29,43 | 411,75 |

Wie anhand der Ergebnisse gesehen werden kann, stabilisieren die an den Rändern der Folie angebrachten Streifen die Folie in einer Weise, dass diese eine deutlich stärkere Dehnung bis zum Reißen (Einreißen der Ränder und damit Abriss der Folie) zulassen.

### Beispiel 2: Bestimmung der Ablösefestigkeit der Folie von der Rolle

Jeweils 500 mm breite, 20 µm dicke dreischichtige Polyethylen-Streckfolien (Haftschicht-Kernschicht-Antihaftschicht) werden jeweils einmal mit Streifen (jeweils 1 Inch = 25,4 mm Breite, 20 µm Dicke; Proben Nr. 1 bis 4) und einmal ohne Streifen an den Rändern (Proben Nr. 5 bis 7) einer Prüfung zur Ablösefestigkeit nach ASTM D 5458, 1995 unterworfen. Kraftaufnehmer Fmax 200N, Konditionierung >24h 23°C, Probenvordehnung 0%.

Tabelle 2 zeigt die erhaltenen Werte für die Ablösekraft der Folie in g/Inch

**Tabelle 2**

| Probe Nr | F_{cling} [g/inch] |
|---|---|
| 1 | 101,60 |
| 2 | 92,81 |
| 3 | 107,54 |
| 4 | 98,81 |
| 5 | 57,15 |
| 6 | 45,05 |
| 7 | 35,96 |

Die erhaltenen Daten zeigen, dass durch das Aufbringen der Streifen an den Rändern der Folie die Ablösekraft deutlich verringert wird, was eine geringere Belastung der Folie und insbesondere der Folienränder bewirkt.

## Patentansprüche

1. Verfahren zur Herstellung einer Folie mit verstärkten Kanten (3) und/oder Rändern, bei dem während deren Herstellungsverfahrens vor deren erstem Aufrollen jeweils an den Rändern der Folie (A) ein Streifen (B') einer weiteren Folie so aufgebracht wird, dass die Folie (A) wenigstens im Bereich der Kanten wenigstens doppellagig ist, **dadurch gekennzeichnet, dass** die Streifen (B') so aufgebracht werden, dass die Streifen (B') mit den Kanten der Folie (A) nahezu bündig abschließen.

2. Verfahren gemäß Anspruch 1, **dadurch gekennzeichnet, dass** die Streifen (B') der weiteren Folie jeweils eine haftende und eine nicht-haftende Seite haben und die haftende Seite mit der zu schützenden Folie (A) in Kontakt kommt.

3. Verfahren gemäß Anspruch 1 oder 2, **dadurch gekennzeichnet, dass** die Streifen (B') auf der Ober- und/oder Unterseite der zu schützenden Folie (A) unmittelbar nach Erzeugen der Folie (A) vor dem ersten Aufwickeln aufgebracht werden.

4. Verfahren gemäß einem der Ansprüche 1 bis 3, **dadurch gekennzeichnet, dass** die Folie (A) eine Streckfolie ist.

5. Verfahren gemäß einem der Ansprüche 1 bis 4, **dadurch gekennzeichnet, dass** die Folie (A) wenigstens eine haftende Seite aufweist.

6. Verfahren gemäß Anspruch 5, **dadurch gekennzeichnet, dass** die haftende Seite der Folie (A) mit der haftenden Seite der Streifen (B') in Kontakt kommt.

7. Verfahren gemäß einem der Ansprüche 1 bis 6, **dadurch gekennzeichnet, dass** die Folie (A) und die Streifen (B') denselben Dehnungskoeffizienten in Längsrichtung haben.

8. Verfahren gemäß einem der Ansprüche 1 bis 7, **dadurch gekennzeichnet, dass** unmittelbar nach dem Gießen oder Extrudieren der Folie (A) an den Rändern der Folie Streifen (B') abgeschnitten werden, diese gegebenenfalls umgedreht werden und noch vor dem ersten Aufrollen der Folie (3) mit dieser wieder in Kontakt gebracht werden.

9. Folienbahn (3) mit verstärkten Kanten und/oder Rändern, die jeweils an den Rändern wenigstens einen Streifen (B') einer weiteren Folienbahn aufweist, so dass die Ränder der Folie (3) mehrlagig sind, **dadurch gekennzeichnet, dass** die Streifen (B') mit den Kanten der Folienbahn (A) möglichst nahezu bündig abschließen.

10. Folienbahn (3) gemäß Anspruch 9, **dadurch gekennzeichnet, dass** die Folie (A) und die Streifen (B') denselben Dehnungskoeffizienten in Längsrichtung haben, oder die Streifen (B') stärker dehnbar sind als die Folie.

11. Folienbahn (3) gemäß Anspruch 9 oder 10, **dadurch gekennzeichnet, dass** sie wenigstens eine haftende Seite aufweist und dass die Streifen (B') auf wenigstens einer haftenden Seite angebracht sind.

12. Verwendung einer Folienbahn (3) gemäß einem der Ansprüche 9 bis 11 zum Verpacken von Gegenständen und/oder zur weiteren Bearbeitung oder Konfektionierung.

## Claims

1. A method for producing a film with reinforced edges (3) and/or borders in which, during the process of producing said film, before it is rolled up for the first time, a strip (B') of the same film is respectively applied to the borders of the film (A) in such a way that the film (A) is at least double-ply at least in the region of the edges, **characterized in that** strips (B') are applied in such a way that the strips (B') terminate almost flush as far as possible with the edges of the film (A).

2. The method as claimed in claim 1, **characterized in that** the strips (B') of the further film have in each case an adhesive side and a non-adhesive side and the adhesive side comes into contact with the film (A) to be protected.

3. The method as claimed in claim 1 or 2, **characterized in that** the strips (B') are applied on the upper side and/or underside of the film (A) to be protected immediately after creation of the film (A), before it is wound up for the first time.

4. The method as claimed in one of claims 1 to 3, **characterized in that** the film (A) is a stretch film.

5. The method as claimed in one of claims 1 to 4, **characterized in that** the film (A) has at least one adhesive side.

6. The method as claimed in claim 5, **characterized in that** the adhesive side of the film (A) comes into contact with the adhesive side of the strips (B').

7. The method as claimed in one of claims 1 to 6, **characterized in that** the film (A) and the strips (B') have the same coefficient in extension in longitudinal sense.

8. The method as claimed in one of claims 1 to 7, **characterized in that** the strips (B') are cut off at the borders of the film immediately after the casting or extrusion of the film (A), if appropriate the strips are turned over and, even before the film (3) is rolled up for the first time, the strips (B') are recontacted with the film (3).

9. A film sheet (3) with reinforced edges and/or borders, which respectively has at the borders at least one strip (B') of a further film, so that the borders of the film (3) are multi-ply, **characterized in that** the strips (B') terminating almost flush as far as possible with the edges of the film sheet (A).

10. The film sheet (3) as claimed in claim 9, **characterized in that** the film (A) and the strips (B') have the same coefficient in extension in longitudinal sense, or the strips (B') are more extendable than the film (A).

11. The film sheet (3) as claimed in claim 9 or 10, **characterized in that** it has at least one adhesive side and **in that** the strips (B') are provided on at least one adhesive side.

12. The use of a film sheet (3) as claimed in either of claims 9 to 11 for packaging items and/or for further working or making up.

## Revendications

1. Procédé servant à fabriquer un film comprenant des arêtes (3) et/ou des bords renforcés, dans le cadre duquel un ruban (B') d'un autre film est appliqué, au cours du procédé de fabrication dudit film, avant son premier enroulement respectivement au niveau des bords du film (A) de sorte que le film (A) est au moins à double couche au moins dans la zone des arêtes, **caractérisé en ce que** les rubans (B') sont appliqués de telle sorte que les rubans (B') se terminent quasiment au même niveau que les arêtes du film (A).

2. Procédé selon la revendication 1, **caractérisé en ce que** les rubans (B') de l'autre film ont respectivement une face adhésive et une face non adhésive, et **en ce que** la face adhésive vient en contact avec le film (A) à protéger.

3. Procédé selon la revendication 1 ou 2, **caractérisé en ce que** les rubans (B') sont appliqués sur la face supérieure et/ou sur la face inférieure du film (A) à protéger, directement après la production du film (A) avant le premier enroulement.

4. Procédé selon l'une quelconque des revendications 1 à 3, **caractérisé en ce que** le film (A) est un film étirable.

5. Procédé selon l'une quelconque des revendications 1 à 4, **caractérisé en ce que** le film (A) présente au moins une face adhésive.

6. Procédé selon la revendication 5, **caractérisé en ce que** la face adhésive du film (A) vient en contact avec la face adhésive des rubans (B').

7. Procédé selon l'une quelconque des revendications 1 à 6, **caractérisé en ce que** le film (A) et les rubans (B') ont le même coefficient d'allongement dans le sens longitudinal.

8. Procédé selon l'une quelconque des revendications 1 à 7, **caractérisé en ce que** sont découpés à la bonne longueur, directement après la coulée ou l'extrusion du film (A), au niveau des bords du film, des rubans (B'), qui sont éventuellement retournés et qui reviennent en contact avec le film (3) encore avant le premier enroulement de ce dernier.

9. Bande de film (3) comprenant des arêtes et/ou bords renforcés, laquelle présente respectivement, au niveau des bords, au moins un ruban (B') d'une autre bande de film de sorte que
les bords du film (3) sont multicouches, **caractérisés en ce que** les rubans (B') se terminent dans la mesure du possible quasiment au même niveau que les arêtes de la bande de film (A).

10. Bande de film (3) selon la revendication 9, **caractérisée en ce que** le film (A) et les rubans (B') ont le même coefficient d'allongement dans le sens longitudinal, ou **en ce que** les rubans (B') peuvent présenter un allongement plus important que le film.

11. Bande de film (3) selon la revendication 9 ou 10, **caractérisée en ce qu'**elle présente au moins une face adhésive, et **en ce que** les rubans (B') sont appliqués sur au moins une face adhésive.

12. Utilisation d'une bande de film (3) selon l'une quelconque des revendications 9 à 11 servant à l'emballage d'objets et/ou servant au traitement ou à la confection ultérieur(e).
